(19) **Europäisches Patentamt / European Patent Office / Office européen des brevets**

(11) **EP 3 384 462 B1**

(12) **FASCICULE DE BREVET EUROPEEN**

(45) Date de publication et mention de la délivrance du brevet:
**06.05.2020 Bulletin 2020/19**

(21) Numéro de dépôt: **16798494.7**

(22) Date de dépôt: **21.11.2016**

(51) Int Cl.:
**G06T 7/00** *(2017.01)*     **G06T 7/73** *(2017.01)*
**G06T 7/77** *(2017.01)*

(86) Numéro de dépôt international:
**PCT/EP2016/078236**

(87) Numéro de publication internationale:
**WO 2017/093057 (08.06.2017 Gazette 2017/23)**

(54) **PROCEDE DE CARACTERISATION D'UNE SCENE PAR CALCUL D'ORIENTATION 3D**

VERFAHREN ZUR CHARAKTERISIERUNG EINER SZENE DURCH BERECHNUNG DER 3D-ORIENTIERUNG

METHOD FOR CHARACTERISING A SCENE BY CALCULATING THE 3D ORIENTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2015 FR 1561657**

(43) Date de publication de la demande:
**10.10.2018 Bulletin 2018/41**

(73) Titulaire: **Commissariat à l'Énergie Atomique et aux Énergies Alternatives 75015 Paris (FR)**

(72) Inventeur: **CHAOUCH, Mohamed 94110 Arcueil (FR)**

(74) Mandataire: **Hammes, Pierre Marks & Clerk France Immeuble Visium 22, avenue Aristide Briand 94117 Arcueil Cedex (FR)**

(56) Documents cités:
- **Aras Dargazany ET AL: "Terrain Traversability Analysis using Organized Point Cloud, Superpixel Surface Normals-based segmentation and PCA-based Classification", 7th Workshop on Field & Assistive Robotics, 17 octobre 2014 (2014-10-17), pages 1-6, XP055295757, Extrait de l'Internet: URL:https://agrosy.informatik.uni-kl.de/fi leadmin/Literatur/Dargazany14.pdf [extrait le 2016-08-16]**
- **BOGOSLAVSKYI IGOR ET AL: "Efficient traversability analysis for mobile robots using the Kinect sensor", 2013 EUROPEAN CONFERENCE ON MOBILE ROBOTS, IEEE, 25 septembre 2013 (2013-09-25), pages 158-163, XP032548193, DOI: 10.1109/ECMR.2013.6698836**
- **RYDE JULIAN ET AL: "Voxel planes: Rapid visualization and meshification of point cloud ensembles", 2013 IEEE/RSJ INTERNATIONAL CONFERENCE ON INTELLIGENT ROBOTS AND SYSTEMS, IEEE, 3 novembre 2013 (2013-11-03), pages 3731-3737, XP032537835, ISSN: 2153-0858, DOI: 10.1109/IROS.2013.6696889 [extrait le 2013-12-27]**
- **Dirk Holz ET AL: "Real-Time Plane Segmentation Using RGB-D Cameras" In: "LECTURE NOTES IN COMPUTER SCIENCE", 1 janvier 2012 (2012-01-01), Springer Berlin Heidelberg, Berlin, Heidelberg, XP055141796, ISSN: 0302-9743 ISBN: 978-3-54-045234-8 vol. 7416, pages 306-317, DOI: 10.1007/978-3-642-32060-6_26, abrégé Section 3 Fast computation of local surface normals; page 308 - page 310**

**Description**

Le domaine de l'invention est celui de l'analyse d'une scène par traitement d'image ou de données 3D.

Plus précisément, l'invention concerne le calcul de l'orientation 3D d'éléments de la scène, en vue d'extraire des caractéristiques géométriques. Ces dernières peuvent être utilisées dans des algorithmes de vision tels que la partition automatique de la scène observée, c'est-à-dire la décomposition automatique de la scène en plusieurs éléments constitutifs, chacun étant un sous-ensemble cohérent, tel qu'un objet donné. En effet, un objet est non seulement une unité visuelle cohérente en termes de couleur et/ou de texture, mais est également une unité spatialement cohérente en termes d'orientation 3D.

Les contextes applicatifs de l'invention sont notamment :

- L'analyse et la détection de structures dominantes (sol, murs).
- La segmentation de la scène.
- La détection des obstacles 3D.

Néanmoins, l'utilisation des orientations ne saurait se limiter à ces applications. Elle concerne tout système temps réel d'analyse de scène à partir de données 3D.

Le calcul des orientations est un domaine exploré dans la vision par ordinateur et le traitement d'image, essentiellement pour les images représentant de l'information 3D.

On distingue plusieurs systèmes de perception 3D :

- Les équipements de type scanner 3D ou caméras à temps de vol (« TOF » : time of Flight) : Ce type de capteurs 3D fournit une image de profondeur où chaque pixel correspond à la distance entre un point de la scène et un point spécifique. Les images de profondeur obtenues sont généralement assez précises, mais elles comportent néanmoins des aberrations (exemple : speckle pour les TOF). Le coût de ces équipements est élevé (un ou plusieurs milliers d'euros), limitant leur utilisation aux applications peu contraintes en coût. De plus, nombre de ces capteurs 3D sont inutilisables dans des applications temps-réel du fait de la faible fréquence des images.
- Les systèmes stéréoscopiques composés généralement d'un ensemble de caméras et/ou de projecteurs, associés à des traitements spécifiques (calcul de disparité). Ils sont adaptés à des applications temps réel et leur coût est bien moindre : le prix est celui des caméras standards (les caméras sont déjà parfois déjà présentes pour d'autres applications, citons par exemple la fonction « caméra de recul »). En revanche, ces images sont davantage bruitées (sensibilité aux conditions d'éclairage, problème avec les surfaces peu texturées..), et l'image de profondeur déduite de la carte de disparité est non dense. La transformation non linéaire de la carte de disparité vers la carte de profondeur, présente une densité d'informations non uniforme dans la carte de profondeur. Typiquement, les données proches de la caméra sont plus denses, et les données à la frontière d'objets peuvent être imprécises.

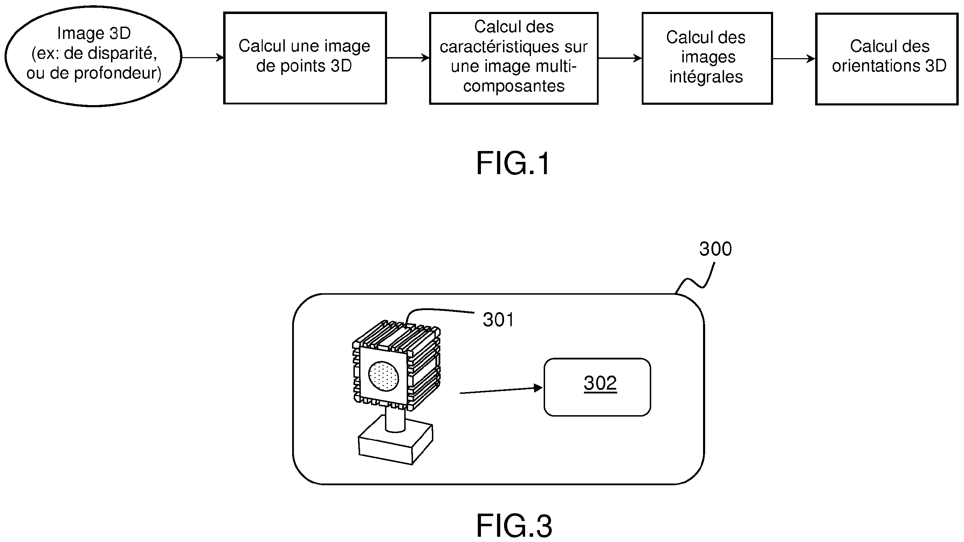

Les solutions temps réel existantes calculent les caractéristiques 3D en utilisant des supports 2D. Le procédé commun à ces méthodes décrit en relation avec la figure 1 est le suivant :

- A partir d'une image 3D de disparité ou de profondeur, calcul d'une image de points 3D. On rappelle qu'une image 3D de disparité ou de profondeur est une projection orthogonale ou en perspective de l'espace 3D sur un plan 2D ; il s'agit en fait d'images 2D auxquelles sont associées des informations de profondeur. On associe à chaque pixel du plan (x,y) de l'image, une profondeur z : p(x,y)=z. A partir de p(x,y) et de z, on obtient les coordonnées X, Y, Z du point correspondant de la scène, par un traitement de ces données connu de l'homme du métier. Pour l'ensemble des pixels, on obtient un nuage de points 3D, dont les coordonnées dans la scène sont représentées par une image 2D pour chacune des composantes X, Y et Z de la scène : une image 2D où chaque pixel est associé à sa coordonnée X, une image 2D où chaque pixel est associé à sa coordonnée Y, une image 2D où chaque pixel est associé à sa coordonnée Z.
- Calcul des caractéristiques sur chacune des trois images 2D ou sur une combinaison de ces images : Pour chaque pixel, des caractéristiques statistiques (moyennes, corrélations, ...) sont calculées en utilisant l'image de points 3D.
- Calcul et stockage en mémoire des images intégrales associées à ces caractéristiques : une image intégrale est calculée pour chaque caractéristique. On rappelle qu'une image intégrale est une image intermédiaire de mêmes dimensions que l'image de points 3D et telle que la valeur associée à chaque pixel est égale à la somme des valeurs des pixels précédents.

- Calcul des orientations 3D : Pour chaque pixel ou super-pixel (= un groupement de quelques pixels), une zone rectangulaire 2D centrée sur le pixel est définie. Des caractéristiques sont calculées localement sur cette zone rectangulaire en utilisant les images intégrales. Chaque caractéristique (définie par la somme des valeurs dans cette zone rectangulaire) est calculée en seulement quatre accès à l'image intégrale correspondante, à raison d'un accès par sommet de la zone rectangulaire. En utilisant les caractéristiques calculées sur ce rectangle, une analyse en composantes principales est réalisée, et l'orientation est donnée par le vecteur propre associé à la petite valeur propre.

Comme exemple d'un tel système stéréoscopique, on peut citer celui décrit dans la publication « Terrain Traversability Analysis using Organized Point Cloud, Superpixel Surface Normals-based segmentation and PCA-based Classification» de Dargazany Aras et Karsten Berns [Dar2014] paru en 2014. Les auteurs présentent un système d'analyse de terrains et d'aide à la navigation (plus particulièrement l'analyse de la traversabilité du terrain) pour les véhicules terrestres sans pilote. Le problème reformulé est divisé en deux principaux sujets : la détection et l'analyse de la surface. L'approche proposée utilise un système stéréoscopique pour générer un nuage dense de points à partir de la carte de disparité.

- Afin de segmenter les éléments de la scène en plusieurs surfaces (représentées par des superpixels), les auteurs proposent d'appliquer une méthode de segmentation d'image sur le nuage de points en utilisant les orientations 3D.
- Pour analyser les surfaces de la scène, les auteurs introduisent une nouvelle méthode appelée SSA (« Superpixel Surface Analysis »). Elle est basée sur l'orientation de la surface, l'estimation de son plan et l'analyse de parcours traversables en utilisant les plans des superpixels. Elle est appliquée à toutes les surfaces détectées (segments de superpixels) afin de les classer en fonction de leur indice de traversabilité. Pour cela, cinq classes ont été définies : traversable, semi-traversable, non traversable, inconnu et indécis.

Mais les résultats obtenus par ce système ne présentent pas une précision homogène pour chaque point du nuage 3D.

On connait également les méthodes et systèmes décrits dans les documents respectifs suivants :

- Bogoslavsky Igor et al : « Efficient traversability analysis for mobile robots using the Kinect sensor », 2013 European conference on mobile robots, IEEE, 25 septembre 2013,
- Ryde Julian et al : « Voxel planes : rapid visualization and meshification of point cloud ensembles », 2013, IEEE/RSJ international conference on intelligent robots and systems, IEEE, 3 novembre 2013.

En conséquence, il demeure à ce jour un besoin pour un procédé de caractérisation d'une scène par calcul d'orientation 3D d'éléments observés donnant simultanément satisfaction à l'ensemble des exigences précitées, en termes de temps de calcul, de précision obtenue et de coût du dispositif de calcul.

Plus précisément l'invention a pour objet un Procédé de caractérisation d'une scène par calcul d'orientation 3D d'éléments observés de la scène qui comporte une étape de calcul de points 3D de la scène, caractérisé en ce qu'il comporte en outre des étapes de :

- quantification régulière des points 3D de la scène, selon trois axes, dans une grille 3D de voxels prédéterminée,
- pour chaque voxel non vide de la grille 3D, calcul de N caractéristiques statistiques prédéfinies à partir des coordonnées des points contenus dans le voxel, avec N un entier supérieur à 1, et pour chacune des N caractéristiques, définition d'une grille 3D associée à ladite caractéristique,
- pour chaque grille 3D associée à une caractéristique statistique, calcul d'une grille 3D intégrale associée à ladite caractéristique statistique, chaque voxel de la grille 3D intégrale comprenant une intégrale de la dite caractéristique statistique,
- pour chaque voxel non vide de la grille 3D de voxels :

  ○ Définition d'un voisinage parallélépipédique rectangle 3D centré sur ledit voxel et de dimensions 3D prédéfinies, et des huit sommets dudit voisinage,
  ○ Pour chacune des N caractéristiques statistiques, calcul de l'intégrale de la caractéristique statistique dans ledit voisinage à partir des huit sommets considérés dans la grille 3D intégrale associée à ladite caractéristique statistique,
  ○ Calcul de la matrice de covariance 3x3 des points 3D dans ledit voisinage à partir desdites intégrales de caractéristiques statistiques,
  ○ Calcul de l'orientation dudit voxel à partir de la matrice de covariance 3x3,.

Le calcul de l'orientation du voxel est par exemple effectué par analyse en composantes principales.

Les N caractéristiques sont typiquement une moyenne de coordonnées et/ou une pondération de coordonnées et/ou une corrélation de coordonnées et/ou un écart-type de coordonnées et/ou un moment d'ordre supérieur de coordonnées.

Les dimensions du voisinage sont les mêmes pour chaque voxel.

Les points 3D de la scène peuvent être obtenus directement à partir d'un capteur 3D ou calculés à partir d'une image 3D de disparité obtenue à partir d'un dispositif stéréoscopique d'acquisition d'images 2D de la scène.

Le procédé selon l'invention se distingue de ceux de l'art antérieur notamment par les trois éléments majeurs suivants :

- utilisation du voisinage 3D réel du point dans la scène pour le calcul des caractéristiques,
- même voisinage 3D quelle que soit la position du voxel,
- utilisation de volumes intégraux.

Il permet :

- un calcul exact de l'orientation 3D, prenant en compte le voisinage direct 3D du point de la scène,
- une approche requérant de faibles ressources de calcul et permettant un déploiement temps réel sur des architectures de calcul standard et bon marché.

En effet, les caractéristiques locales permettant le calcul de l'orientation sont optimisées localement, prenant en considération seulement le voisinage direct 3D du point.

L'invention aussi pour objet un produit programme d'ordinateur, ledit programme d'ordinateur comprenant des instructions de code permettant d'effectuer les étapes du procédé de caractérisation décrit, lorsque ledit programme est exécuté sur un ordinateur.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un organigramme de procédé de caractérisation selon l'état de la technique.
la figure 2 représente schématiquement un organigramme de procédé de caractérisation selon l'invention,
la figure 3 représente schématiquement un dispositif de caractérisation d'une scène configuré pour mettre en œuvre l'invention.

L'image de profondeur ou l'image de disparité est une projection (orthogonale ou perspective) de l'espace 3D à un plan 2D. Le résultat de cette projection provoque en partie une perte de la notion du voisinage 3D entre éléments de la scène. Comme les solutions existantes reposent sur les images intégrales, les caractéristiques locales sont calculées systématiquement sur des supports 2D (zones rectangulaires de l'image 2D). Ces zones peuvent contenir plusieurs éléments de la scène qui ne sont pas nécessairement proches les uns des autres. Dans ces cas, les erreurs importantes engendrées par le voisinage 2D faussent les caractéristiques et pénalisent d'autant plus le calcul des orientations 3D.

Un traitement direct sur l'image 2D peut permettre de retrouver certains éléments caractéristiques de la scène initiale, sous réserve d'apporter des informations complémentaires ou d'effectuer des traitements supplémentaires.

Cependant, le seul moyen pour retrouver les caractéristiques locales 3D de manière précise est de considérer l'espace réel qui est de nature tridimensionnelle. La connaissance du voisinage réel de l'élément dans la scène a un impact important sur la précision des caractéristiques.

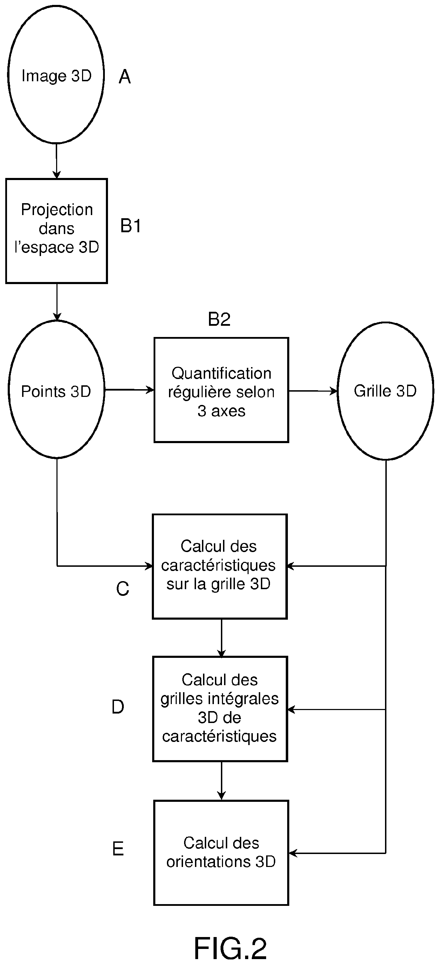

Le procédé selon invention permet de calculer les orientations en 3D sur les éléments de la scène représentée par une image 3D (de disparité ou de profondeur) selon une méthode temps réel qui tient compte de la densité spatiale dans un voisinage 3D proche du point de la scène pour le calcul de son orientation. Plus précisément, ce procédé comporte les étapes suivantes décrites en relation avec la figure 2.

- A) Acquisition d'une image de disparité ou de profondeur: la scène est observée à partir d'un capteur 3D tel qu'un capteur stéréoscopique passif ou actif, ou à mesure de temps de vol (« Time Of Flight »), ou un Lidar multi-plans, fournissant une image de disparité ou de profondeur. Des filtres peuvent être appliqués sur l'image pour supprimer le bruit (bruit d'origine naturelle comme la pluie, l'éblouissement, la poussière, bruit lié aux capteurs ou bruit lié aux traitements).

- B) Projection dans l'espace 3D de la scène (B1) et quantification régulière selon trois axes X, Y, Z (B2) : l'image de disparité ou de profondeur est transformée en un nuage de points 3D en utilisant par exemple les méthodes suivantes, l'une basée sur une image de disparité donnée par un système stéréoscopique, l'autre basée sur une image de profondeur donnée par un capteur 3D.

Avec la première méthode basée sur une image de disparité donnée par un système stéréoscopique, chaque pixel de l'image de disparité est défini par deux coordonnées (u, v) et une valeur de disparité d. Une disparité donnée par un système stéréoscopique correspond à un point 3D visible de la scène. La disparité d d'un pixel et la coordonnée z du point 3D associé sont liées. Ce lien est défini par l'équation suivante :

$$z * d = B * f$$

La base B (distance entre les deux centres optiques ou « baseline » en anglais) et la distance focale f (la même pour les deux caméras) étant des valeurs constantes, une variation de disparité d dépend directement d'une variation de la distance z entre l'objet et les caméras. Le point 3D de coordonnées cartésiennes (x, y, z) correspondant au pixel de coordonnées (u, v) et de disparité d est calculé comme suit :

$$z = B * f/d$$

$$x = (u\text{-}u0) * z/f$$

$$y = (v\text{-}v0) * z/f$$

Les coordonnées cartésiennes (x, y, z) des points réels correspondants aux pixels de l'image de la disparité sont ainsi connues. Cela permet d'obtenir un nuage de points 3D représentant la scène dont les dimensions de ses éléments sont réelles.

Avec la deuxième méthode basée sur une image de profondeur donnée par un capteur 3D tel qu'un capteur désigné sous sa marque commerciale Kinect™, chaque pixel de l'image de profondeur est défini par deux coordonnées (u, v) et une valeur de profondeur z. Par exemple, la profondeur renvoyée par une Kinect™ pour chaque pixel est la distance d'un point réel au plan capteur en mm. Cette distance est la coordonnée z du point 3D représenté par le pixel associé (u,v). A partir de cette coordonnée z, on peut définir le point 3D en calculant les deux coordonnées cartésiennes x et y comme suit :

$$x = 2 * z * \tan(fov_H/2) * u/uSize$$

$$y = 2 * z * \tan(fov_V/2) * v/vSize$$

avec (u,v) les coordonnées du pixel, (uSize,vSize) la taille de l'image de profondeur, $fov_H$ et $fov_V$ les champs de vision (horizontal et vertical) de la Kinect™ (en radians).

Les coordonnées cartésiennes (x, y, z) des points réels correspondants aux pixels de l'image de profondeur sont ainsi connues. Cela permet d'obtenir un nuage de points 3D représentant la scène dont les dimensions de ses éléments sont réelles.

On peut aussi disposer directement de ce nuage de points sans passer par l'acquisition d'une image de disparité ou de profondeur. Ces points sont ensuite quantifiés dans une grille 3D prédéfinie composée de l x h x p cellules (l cellules selon X, h cellules selon Y et p cellules selon Z), dite grille 3D d'origine. Les limites de la grille 3D sont choisies en fonction de la scène à caractériser. Il peut y avoir plusieurs points 3D par cellule. On désigne aussi cellule par le terme voxel.

- C) Calcul des caractéristiques sur la grille 3D : Pour chaque cellule $c(i,j,k)$ « allumée » de la grille 3D d'origine (i variant de 1 à l, j variant de 1 à h, k variant de 1 à p), c'est-à-dire pour chaque cellule comportant au moins un point 3D, N caractéristiques statistiques sont calculées à partir des coordonnées des points 3D contenus dans ladite cellule. Parmi ces caractéristiques on peut citer la pondération des coordonnées, leurs moyennes, leurs corrélations, leurs écart-types, leurs moments d'ordre supérieur. Pour chaque cellule $c(i,j,k)$ vide (non allumée) de la grille, ces caractéristiques statistiques sont nulles. Les caractéristiques calculées pour toutes les cellules sont stockées dans une nouvelle grille 3D de caractéristiques à N composantes ; dit autrement on obtient N grilles 3D respectivement associées à chaque caractéristique soit dans notre exemple une grille 3D de pondérations, une grille 3D de moyennes, une grille 3D de corrélations etc.

- D) Calcul des volumes intégraux : En utilisant la méthode du volume intégral, une grille 3D-intégrale à N composantes est calculée à partir de la grille 3D de caractéristiques à N composantes ; dit autrement on obtient N grilles 3D intégrales respectivement associées à chaque caractéristique soit dans notre exemple une grille 3D intégrale de pondérations, une grille 3D intégrale de moyennes, une grille 3D intégrale de corrélations etc. Chaque « volume intégral » est une représentation sous la forme d'une grille numérique, de même taille que la grille d'origine. Chacune de ses cellules contient la somme des cellules de la grille de caractéristique situées derrière, au-dessus et à gauche de la cellule. Les expressions « derrière», « au-dessus », « à gauche», sont utilisées en référence à l'orientation du capteur. Dans la mesure où le capteur peut être positionné selon d'autres orientations, la terminologie directionnelle est indiquée à titre d'illustration et n'est pas limitative.

Plus explicitement, le volume intégral $vi$ est défini à partir d'une grille $v$ par l'équation suivante :

$$vi(i,j,k) = \sum_{i'=0}^{i} \sum_{j'=0}^{j} \sum_{k'=0}^{k} v(i',j',k')$$

avec $v(i,j,k)$ la valeur du voxel (i,j,k) de la grille $v$.

Cette triple somme peut se calculer par récurrence en utilisant l'équation suivante :

$$vi(i,j,k) = v(i,j,k) + vi(i,j,k-1) + vi(i,j-1,k) - vi(i,j-1,k-1)$$
$$+ vi(i-1,j,k) - vi(i-1,j,k-1) - vi(i-1,j-1,k)$$
$$+ vi(i-1,j-1,k-1)$$

Le volume intégral peut donc se calculer efficacement en parcourant une seule fois la grille d'origine.

Grâce à cette représentation, la somme des valeurs des voxels de la grille v dans un volume parallélépipédique rectangle peut être calculée en seulement huit accès au volume intégral $vi$ et donc en temps constant quelle que soit la taille de la zone parallélépipédique. Plus formellement, la somme des voxels $v(i,j,k)$ à l'intérieur de n'importe quelle boite 3D définie par $(i_0, i_1, j_0, j_1, k_0, k_1)$ peut être calculée selon l'équation suivante :

$$\sum_{i=i_0}^{i_1} \sum_{j=j_0}^{j_1} \sum_{k=k_0}^{k_1} v(i,j,k)$$
$$= vi(i_1,j_1,k_1) - vi(i_1,j_1,k_0-1) - vi(i_1,j_0-1,k_1)$$
$$+ vi(i_1,j_0-1,k_0-1) - vi(i_0-1,j_1,k_1) + vi(i_0-1,j_1,k_0-1)$$
$$+ vi(i_0-1,j_0-1,k_1) - vi(i_0-1,j_0-1,k_0-1)$$

- E) Calcul des orientations 3D : Pour chaque cellule $c(i,j,k)$ allumée de la grille 3D d'origine, un voisinage 3D est défini. Il s'agit d'un volume 3D parallélépipédique rectangle (= boîte 3D rectangulaire) centré sur ladite cellule, et dont les coordonnées de ses huit sommets sont aussi définies. Les dimensions de ce volume sont prédéterminées et paramétrables et ce sont les mêmes pour chaque cellule. Elles sont typiquement déterminées expérimentalement par exemple en fonction de la résolution du nuage de points 3D, la précision de l'information 3D et aussi la taille des éléments de la scène à caractériser qui sont prédéterminées.

Pour chaque cellule allumée, et pour chacune des N caractéristiques, on calcule l'intégrale de la caractéristique dans le voisinage considéré dans la grille 3D intégrale associée à ladite caractéristique. Le calcul de l'intégrale des caractéristiques pour chaque cellule se base sur la méthode du volume intégral (détaillée dans l'étape D) permettant de calculer rapidement des sommes de valeurs dans ces parallélépipèdes rectangles (boites 3D rectangulaires). Ce calcul est réalisé sur les huit sommets de ce volume, ne nécessitant ainsi que huit accès à cette grille 3D intégrale. En effet une intégrale de caractéristique qui est une somme des valeurs de la caractéristique dans le volume 3D parallélépipédique est donnée par sept opérations (trois additions plus quatre différences) sur les valeurs de l'intégrale de la caractéristique, relevées sur les huit sommets (selon la dernière équation détaillée dans l'étape D) du voisinage. En utilisant les N intégrales de caractéristiques calculées sur ce volume centré sur la cellule, une méthode d'analyse de données est réalisée pour en déduire l'orientation 3D.

A titre d'exemple, une analyse en composantes principales peut être appliquée et l'orientation est donnée par la composante principale associée à la petite valeur propre de la matrice de covariance 3x3. Dans ce cas, les axes principaux d'un ensemble de points 3D (ici les points 3D compris dans le parallélépipède rectangle centré sur la cellule) sont calculés et étiquetés par ordre croissant selon leurs valeurs propres. La matrice de covariance 3x3 des points 3D dans le voisinage est calculée en utilisant les N intégrales de caractéristique (pondération, moyennes, corrélations) calculées dans le voisinage. Puisque la matrice de covariance est une matrice symétrique définie positive, elle est alors diagonalisable, ses valeurs propres sont des réels positifs et ses vecteurs propres orthogonaux sont les composantes principales cherchées. Le vecteur propre associé à la petite valeur propre est la normale caractérisant localement l'orientation de la cellule. On obtient ainsi l'orientation de chaque cellule $c(i,j,k)$ allumée de la grille 3D d'origine.

Ainsi, l'utilisation d'un voisinage volumique dans une grille 3D comprenant les valeurs d'intégrale des caractéristiques statistiques permet de calculer efficacement la matrice de covariance 3x3 dans ce voisinage pour en déduire l'orientation d'une cellule sur laquelle est centré le voisinage.

Le procédé selon l'invention se distingue de ceux de l'art antérieur notamment par les trois éléments majeurs suivants :

- utilisation du voisinage 3D réel du point dans la scène pour le calcul des caractéristiques,
- même voisinage 3D quelle que soit la position du voxel,
- utilisation de volumes intégraux.

Il permet :

- un calcul exact de l'orientation 3D, prenant en compte le voisinage direct 3D du point de la scène,
- une approche requérant de faibles ressources de calcul et permettant un déploiement temps réel sur des architectures de calcul standard et bon marché.

En effet, les caractéristiques locales permettant le calcul de l'orientation sont optimisées localement, prenant en considération seulement le voisinage direct 3D du point. De plus, les dimensions du voisinage sont les mêmes quelle que soit la position du point dans l'espace.

Cela est novateur par rapport aux approches de l'état de l'art qui proposent de calculer les caractéristiques géométriques sur un support 2D fixe, car dans ce cas la taille du support 2D fixe n'est pas cohérente avec la réalité physique (géométrique), puisque les zones délimitées par ce support 2D peuvent contenir plusieurs éléments de la scène qui ne sont pas nécessairement proches les uns des autres.

La présente invention permet d'améliorer la perception 3D de l'environnement, et conséquemment d'améliorer les résultats des traitements ultérieurs, tout en maintenant un coût système faible, propice à son utilisation en temps réel dans de nombreux contextes. Elle a par exemple été mise en œuvre sur un processeur de type ARM™ embarqué sur téléphone portable, les orientations étant obtenues en moins de 30 ms.

Les caractéristiques d'orientation sont utiles pour des applications telles que la détection d'obstacles 3D, la catégorisation d'obstacles 3D, la détection des éléments structurants de la scène (comme le sol, les murs ...), la segmentation et l'analyse de la scène 3D (en particulier la segmentation et l'analyse du sol).

Ce procédé de caractérisation d'une scène par calcul d'orientation 3D, peut notamment s'implémenter à partir d'un produit programme d'ordinateur, ce programme d'ordinateur comprenant des instructions de code permettant d'effectuer les étapes du procédé de reconstruction. Il est enregistré sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

La figure 3 représente schématiquement un dispositif 300 configuré pour mettre en œuvre l'invention. Un tel dispositif 300 comporte un moyen 301 de capture d'une représentation 3D d'une scène et un moyen 302 de traitement des données capturées, configuré pour exécuter les différents modes de réalisation du procédé selon l'invention tels que décrits ci-dessus.

Le moyen 301 de capture peut être réalisé par tout type de système de perception 3D décrit précédemment, par exemple un scanner 3D ou une caméra à temps de vol ou un système stéréoscopique. Le moyen 302 de traitement de données peut être réalisé par un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).
Le dispositif 300 peut aussi comporter un moyen d'affichage des données captées en 3D ou en 2D.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

**Revendications**

1. Procédé de caractérisation d'une scène par calcul d'orientation 3D d'éléments observés de la scène qui comporte une étape de calcul de points 3D de la scène (étape B1), **caractérisé en ce qu'**il comporte en outre des étapes de :

    - quantification régulière des points 3D de la scène, selon trois axes, dans une grille 3D de voxels prédéterminée (étape B2),
    - pour chaque voxel non vide de la grille 3D, calcul de N caractéristiques statistiques prédéfinies à partir des coordonnées des points contenus dans le voxel, avec N un entier supérieur à 1, et pour chacune des N caractéristiques, définition d'une grille 3D associée à ladite caractéristique, (étape C)
    - pour chaque grille 3D associée à une caractéristique statistique, calcul d'une grille 3D intégrale associée à ladite caractéristique statistique, chaque voxel de la grille 3D intégrale comprenant une intégrale de la dite caractéristique statistique (étape D),
    - pour chaque voxel non vide de la grille 3D de voxels :

        ◦ Définition d'un voisinage parallélépipédique rectangle 3D centré sur ledit voxel et de dimensions 3D prédéfinies, et des huit sommets dudit voisinage,
        ◦ Pour chacune des N caractéristiques statistiques, calcul de l'intégrale de la caractéristique statistique dans ledit voisinage à partir des huit sommets considérés dans la grille 3D intégrale associée à ladite caractéristique statistique,
        ◦ Calcul de la matrice de covariance 3x3 des points 3D dans ledit voisinage à partir desdites intégrales de caractéristiques statistiques,
        ◦ Calcul de l'orientation dudit voxel à partir de la matrice de covariance 3x3 (étape E).

2. Procédé de caractérisation d'une scène par calcul d'orientation 3D selon la revendication précédente, **caractérisé en ce que** le calcul de l'orientation du voxel est effectué par analyse en composantes principales.

3. Procédé de caractérisation d'une scène par calcul d'orientation 3D selon l'une des revendications précédentes, **caractérisé en ce que** les N caractéristiques statistiques sont prises parmi l'ensemble suivant : une moyenne de coordonnées , une pondération de coordonnées, une corrélation de coordonnées, un écart-type de coordonnées, un moment d'ordre supérieur de coordonnées.

4. Procédé de caractérisation d'une scène par calcul d'orientation 3D selon l'une des revendications précédentes, **caractérisé en ce que** les dimensions du voisinage sont les mêmes pour chaque voxel.

5. Procédé de caractérisation d'une scène par calcul d'orientation 3D selon l'une des revendications précédentes, **caractérisé en ce que** les points 3D de la scène sont obtenus directement à partir d'un capteur 3D.

6. Procédé de caractérisation d'une scène par calcul d'orientation 3D selon l'une des revendications 1 à 4, **caractérisé en ce que** les points 3D de la scène sont calculés à partir d'une image 3D de disparité obtenue à partir d'un dispositif stéréoscopique d'acquisition d'images 2D de la scène (étape A).

7. Un produit programme d'ordinateur, ledit programme d'ordinateur comprenant des instructions de code permettant d'effectuer les étapes du procédé selon l'une quelconque des revendications 1 à 6, lorsque ledit programme est exécuté sur un ordinateur.

8. Système de caractérisation d'une scène comprenant un moyen de capture d'une représentation en trois dimensions d'une scène et un moyen de traitement configuré pour exécuter le procédé selon l'une quelconque des revendications 1 à 6.

# EP 3 384 462 B1

**Patentansprüche**

1. Verfahren zur Charakterisierung einer Szene durch Berechnen der 3D-Orientierung von beobachteten Elementen der Szene, welches einen Schritt der Berechnung von 3D-Punkten der Szene (Schritt B1) beinhaltet, **dadurch gekennzeichnet, dass** es zudem folgende Schritte beinhaltet:

   - regelmäßige Quantifizierung der 3D-Punkte der Szene, entlang drei Achsen, in einem vorbestimmten 3D-Voxelraster (Schritt B2),
   - für jeden nicht leeren Voxel des 3D-Rasters, Berechnen von N vorbestimmten statistischen Charakteristiken anhand der Koordinaten der in dem Voxel enthaltenen Punkte, wobei N eine Ganzzahl größer als 1 ist, und für jede der N Charakteristiken, Definieren eines der Charakteristik zugeordneten 3D-Rasters, (Schritt C)
   - für jedes einer statistischen Charakteristik zugeordnete 3D-Raster, Berechnen eines der statistischen Charakteristik zugeordneten integralen 3D-Rasters, wobei jeder Voxel des integralen 3D-Rasters eine Integrale der statistischen Charakteristik beinhaltet (Schritt D),
   - für jeden nicht leeren Voxel des 3D-Voxelrasters:

      ∘ Definieren einer quaderförmigen 3D-Nachbarschaft, welche auf den Voxel zentriert ist und vorbestimmte 3D-Abmessungen aufweist, und der acht Ecken der Nachbarschaft,
      ∘ für jede der N statistischen Charakteristiken, Berechnen der Integralen der statistischen Charakteristik in der Nachbarschaft anhand der acht Ecken, welche in dem integralen 3D-Raster betrachtet werden, welches der statistischen Charakteristik zugeordnet ist,
      ∘ Berechnen der 3x3-Kovarianzmatrix der 3D-Punkte in der Nachbarschaft anhand der Integralen der statistischen Charakteristiken,
      ∘ Berechnen der Orientierung des Voxels anhand der 3x3-Kovarianzmatrix (Schritt E).

2. Verfahren zur Charakterisierung einer Szene durch Berechnen der 3D-Orientierung nach dem vorhergehenden Anspruch, **dadurch gekennzeichnet, dass** die Berechnung der Orientierung des Voxels durch Hauptkomponentenanalyse erfolgt.

3. Verfahren zur Charakterisierung einer Szene durch Berechnen der 3D-Orientierung nach einem der vorhergehenden Ansprüche, **dadurch gekennzeichnet, dass** die N statistischen Charakteristiken aus folgender Gruppe gewählt sind: einem Koordinatenmittelwert, einer Koordinatengewichtung, einer Koordinatenkorrelation, einer Koordinaten-Standardabweichung, einem Koordinatenmoment höherer Ordnung.

4. Verfahren zur Charakterisierung einer Szene durch Berechnen der 3D-Orientierung nach einem der vorhergehenden Ansprüche, **dadurch gekennzeichnet, dass** die Abmessungen der Nachbarschaft dieselben für jeden Voxel sind.

5. Verfahren zur Charakterisierung einer Szene durch Berechnen der 3D-Orientierung nach einem der vorhergehenden Ansprüche, **dadurch gekennzeichnet, dass** die 3D-Punkte der Szene direkt anhand eines 3D-Sensors erzielt werden.

6. Verfahren zur Charakterisierung einer Szene durch Berechnen der 3D-Orientierung nach einem der Ansprüche 1 bis 4, **dadurch gekennzeichnet, dass** die 3D-Punkte der Szene anhand eines 3D-Disparitätsbildes berechnet werden, welches anhand einer stereoskopischen 2D-Bilderfassungsvorrichtung der Szene erzielt wird (Schritt A).

7. Computerprogrammprodukt, wobei das Computerprogramm Code-Befehle beinhaltet, welche es ermöglichen, die Schritte des Verfahrens nach einem der Ansprüche 1 bis 6 durchzuführen, wenn das Programm auf einem Computer ausgeführt wird.

8. Verfahren zur Charakterisierung einer Szene, beinhaltend ein Mittel zur Aufnahme einer dreidimensionalen Darstellung einer Szene und ein Verarbeitungsmittel, welches konfiguriert ist, um das Verfahren nach einem der Ansprüche 1 bis 6 auszuführen.

**Claims**

1. A method for characterizing a scene by computing the 3D orientation of observed elements of the scene, including a step of computing 3D points of the scene (step B1), **characterized in that** it furthermore includes steps of:

- regularly quantifying the 3D points of the scene, along three axes, in a preset 3D grid of voxels (step B2);
- for each non-empty voxel of the 3D grid, computing N predefined statistical characteristics from the coordinates of the points contained in the voxel, where N is an integer higher than 1, and for each of the N characteristics, defining a 3D grid associated with said characteristic (step C);
- for each 3D grid associated with a statistical characteristic, computing an integral 3D grid associated with said statistical characteristic, each voxel of the integral 3D grid comprising an integral of said statistical characteristic (step D);
- for each non-empty voxel of the 3D grid of voxels:

  ∘ defining a 3D rectangular parallelepipedal vicinity centered on said voxel and of predefined 3D dimensions, and eight vertices of said vicinity;
  ∘ for each of the N statistical characteristics, computing the integral of the statistical characteristic in said vicinity on the basis of the eight vertices of the integral 3D grid associated with said statistical characteristic;
  ∘ computing the $3\times3$ covariance matrix of the 3D points in said vicinity on the basis of said integrals of the statistical characteristics;
  ∘ computing the orientation of said voxel on the basis of the $3\times3$ covariance matrix (step E).

2. The method for characterizing a scene by computing 3D orientation as claimed in the preceding claim, **characterized in that** the orientation of the voxel is computed via a principal component analysis.

3. The method for characterizing a scene by computing 3D orientation as claimed in any one of the preceding claims, **characterized in that** the N statistical characteristics are selected from the following set: an average of coordinates, a weighting of coordinates, a correlation of coordinates, a standard deviation of coordinates, a higher-order moment of coordinates.

4. The method for characterizing a scene by computing 3D orientation as claimed in any one of the preceding claims, **characterized in that** the dimensions of the vicinity are the same for each voxel.

5. The method for characterizing a scene by computing 3D orientation as claimed in any one of the preceding claims, **characterized in that** the 3D points of the scene are obtained directly from a 3D sensor.

6. The method for characterizing a scene by computing 3D orientation as claimed in one of claims 1 to 4, **characterized in that** the 3D points of the scene are computed from a 3D disparity map obtained from a stereoscopic device acquiring 2D images of the scene (step A).

7. A computer program product, said computer program comprising code instructions allowing the steps of the method as claimed in any one of claims 1 to 6 to be carried out when said program is executed on a computer.

8. A system for characterizing a scene, comprising a means for capturing a three-dimensional representation of a scene and a processing means that is configured to execute the method as claimed in any one of claims 1 to 6.

```
┌─────────────┐      ┌──────────────┐   ┌──────────────┐   ┌──────────────┐   ┌──────────────┐
│  Image 3D   │      │              │   │ Calcul des   │   │ Calcul des   │   │              │
│(ex: de      │ ───► │ Calcul une   │►  │caractéristiq.│►  │  images      │►  │ Calcul des   │
│ disparité,  │      │ image de     │   │ sur une      │   │ intégrales   │   │ orientations │
│ou de        │      │ points 3D    │   │ image multi- │   │              │   │ 3D           │
│profondeur)  │      │              │   │ composantes  │   │              │   │              │
└─────────────┘      └──────────────┘   └──────────────┘   └──────────────┘   └──────────────┘
```

## FIG.1

## FIG.3

Image 3D } A

Projection
dans
l'espace 3D    B1

B2

Points 3D → Quantification
régulière selon
3 axes → Grille 3D

Calcul des
caractéristiques
sur la grille 3D
C

Calcul des
grilles intégrales
3D de
caractéristiques
D

Calcul des
orientations 3D
E

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE DARGAZANY ARAS ; KARSTEN BERNS.** *Terrain Traversability Analysis using Organized Point Cloud, Superpixel Surface Normals-based segmentation and PCA-based Classification,* 2014
- Efficient traversability analysis for mobile robots using the Kinect sensor. **BOGOSLAVSKY IGOR et al.** 2013 European conference on mobile robots. IEEE, 25 Septembre 2013
- Voxel planes : rapid visualization and meshification of point cloud ensembles. **RYDE JULIAN et al.** 2013, IEEE/RSJ international conference on intelligent robots and systems. IEEE, 03 Novembre 2013